# EUROPEAN PATENT APPLICATION

(11) **EP 1 388 653 A1**
(43) Date of publication of application: **11.02.2004**
(21) Application number: 03017856.0
(22) Date of filing: 05.08.2003
(51) Int. Cl.: F02B 27/02, F02M 35/12

(54) **Variable-geometry resonator for a vehicle engine air intake system, and air intake system featuring such a resonator**

(30) Priority: 06.08.2002 IT to20020700
(71) Applicant: OFFICINE METALLURGICHE G. CORNAGLIA S.p.A., 10092 Beinasco (IT)
(72) Inventor: Cornaglia, Umberto, 10027 Testona (IT); Tarabocchia, Alessio, 10127 Torino (IT)
(74) Representative: Franzolin, Luigi

(57) **Abstract**

A variable-geometry resonator (4) for silencing an air intake system (1) of a vehicle engine, wherein a closed, axially symmetrical casing (8) has two couplings (10,15) communicating hydraulically with the outside, and is divided internally into two variable-volume chambers (11,12) - each connected permanently to one of the couplings (10,15) - by a partition (13) movable axially and cooperating in fluidtight manner with an inner lateral wall (14) of the closed casing (8); the resonator (4) also has means (16) for moving the movable partition (13) axially inside the closed casing (8) in response to a variation in the speed of the engine, and means for connecting the couplings (10,15) hydraulically to two different hydraulically in-series portions (3,3a) of an air intake pipe (2) of the engine.

## Description

The present invention relates to a variable-geometry resonator suitable for use in a vehicle internal combustion engine air intake system, and to a vehicle engine air intake system featuring such a variable-geometry resonator.

As is known, on account of the fluid-dynamic phenomena involved, engine air intake systems produce noise and mechanical vibration as a function of engine speed : certain frequencies predominate at low speed, and others at high speed. To enhance driving comfort, reduce noise, and minimize transmission of vibration to the passenger and engine compartments of the vehicle - which, apart from the discomfort involved, may also cause loosening of mechanical connections (e.g. joints, sleeves, etc.) - steps must be taken at present at the design stage to reduce vibration/noise as far as possible.

Precisely, however, on account of intake vibration/noise depending closely on engine speed, thus precluding optimum sizing of the intake pipe, additional elements are resorted to, such as one or more resonant chambers branching from or along the "virtual" or "equivalent" length of the intake pipe. In the latter case, variable-geometry solutions are known, i.e. capable of adapting to different engine speed conditions, and all of which operate on an initial or end portion of the intake pipe, e.g. to adjust its diameter or length at the inlet.

Solutions of the type described are not without drawbacks. Firstly, they are complex in design and expensive to produce. And, secondly, being "made to measure" for a specific type of engine (in terms of piston displacement/power), they cannot be adapted easily to other engines or mass produced. Consequently, intake noise/vibration control using variable-geometry solutions is currently restricted to luxury vehicle, e.g. grandtourism car, engines.

It is an object of the present invention to provide a vehicle engine air intake system, which provides for low noise and vibration at all engine speeds, and which, at the same time, is cheap and easy to produce, reliable, and compact.

According to the present invention, there is provided a vehicle engine air intake system, characterized by comprising an intake pipe, and a variable-geometry resonator branch-connected hydraulically to said pipe.

It is a further object of the invention to provide a variable-geometry resonator adaptable to different intake systems of different engines, so that it can be mass produced to reduce cost, and which, in particular, is highly flexible, strong, wear resistant, cheap to produce, and can be inserted easily into different engine layouts.

According to the present invention, there is provided a variable-geometry resonator for an air intake system of a vehicle engine, the resonator comprising a casing defining a closed inner empty volume of given size, and at least a first coupling for connecting said closed inner volume hydraulically to the outside; the first coupling being formed integrally with the casing, and being branch-connectable to an air intake pipe of the engine; characterized in that said casing is axially symmetrical, said closed inner volume of the casing being divided into a first and second variable-volume chamber by a partition fitted and movable axially inside said casing and cooperating in fluidtight manner with an inner lateral wall of the casing; and in that, in combination, the resonator also comprises a second coupling for connecting said closed inner volume hydraulically to the outside, and which is formed integrally with the casing and branch-connectable to an air intake pipe of the engine; said couplings being so located that said first variable-volume chamber is always connected exclusively to said first coupling, and said second variable-volume chamber is always connected exclusively to said second coupling; the resonator also comprising means for moving said movable partition axially inside the casing in response to a variation in the speed of the engine; and means for hydraulically connecting the couplings to two different portions, located hydraulically in series, of said intake pipe of the engine.

More specifically, the movable partition is moved by means of a shaft and screw/nut screw means, by virtue of its periphery and the cross section of the casing being conjugate and non-circular in shape, to prevent the partition rotating on the shaft.

Two variable-volume chambers - of which, according to a further aspect of the invention, said first chamber has a maximum volume much smaller than the minimum volume of said second chamber - can thus be branch-connected in different sequences to the same intake pipe, and the variation in volume of both can be adjusted by simply adjusting the travel of the movable partition. The same resonator can therefore be adapted to different vehicles and engines, thus enabling scale economies and considerable saving in component parts.

A non-limiting embodiment of the present invention will be described by way of example with reference to the accompanying drawings, in which:
Figure 1 shows a view in perspective of part of a vehicle engine air intake system featuring the resonator according to the invention;
Figure 2 shows a longitudinal section of the Figure 1 resonator.

With reference to the accompanying drawings, number 1 indicates as a whole an air intake system forming part of a known vehicle engine (not shown for the sake of simplicity) and comprising an intake pipe 2, a portion 3 of which - located hydraulically downstream from a known air filter (not shown for the sake of simplicity) and upstream from a known intake manifold (not shown for the sake of simplicity) of the engine - is branch-connected, according to the invention, to a variable-geometry resonator device 4.

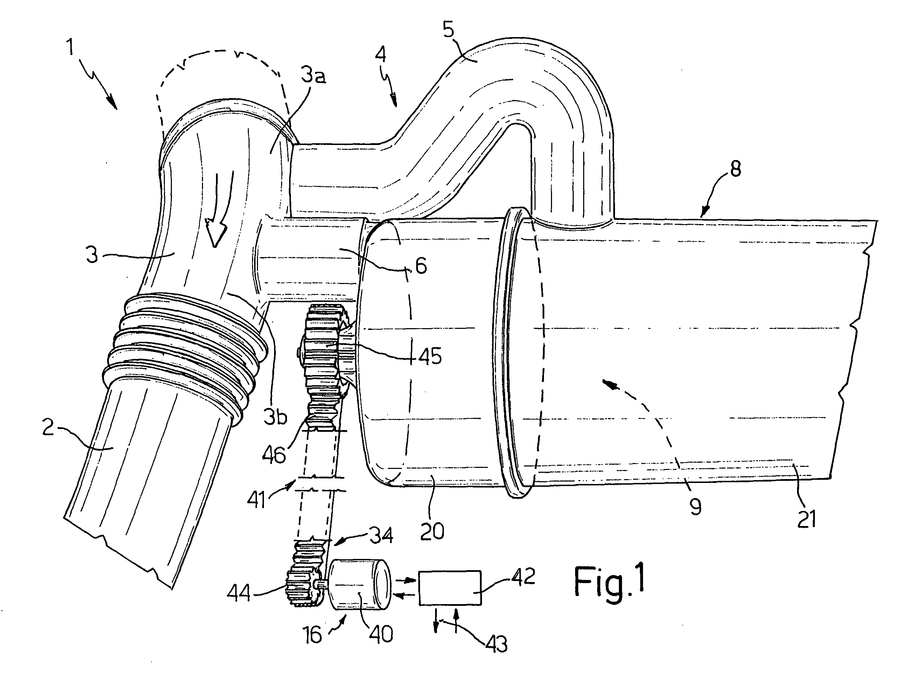

More specifically, resonator 4 is branch-connected hydraulically to two series portions 3a, 3b of portion 3 of pipe 2 - portion 3b being located downstream from portion 3a in the airflow direction in pipe 2 indicated by the arrow (Figure 1) - by respective branch pipes 5, 6 projecting transversely from pipe 2.

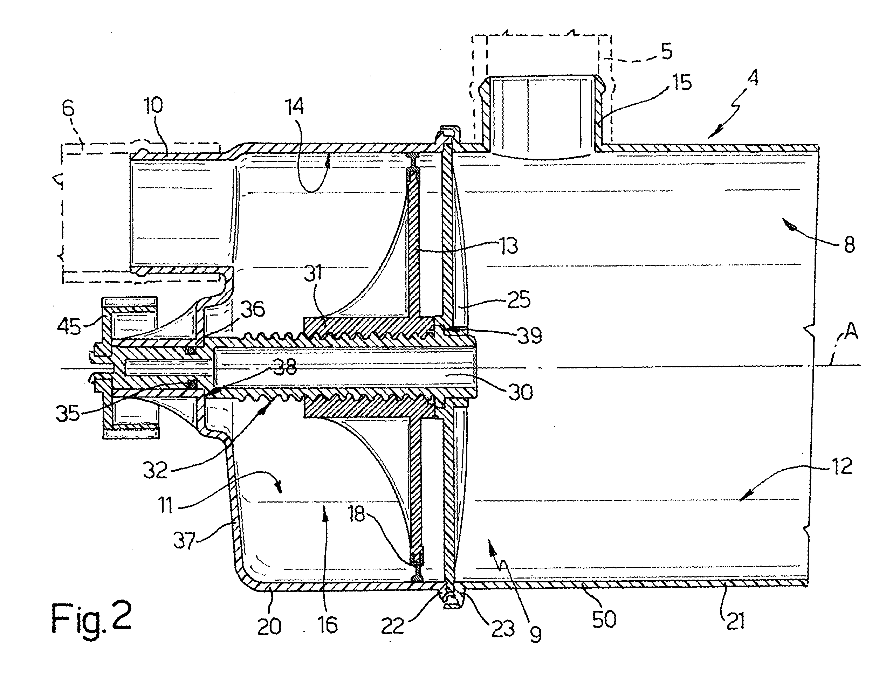

Variable-geometry resonator device 4 comprises a casing 8 defining a closed inner empty volume 9 of given size; and a first coupling 10 (Figure 2) formed integrally with casing 8 and for connecting closed inner volume 9 hydraulically to the outside (of casing 8) - in the example shown, for branch-connecting the closed inner volume to pipe 2 by means of pipe 6, which fits in known manner to downstream portion 3b of pipe 2.

According to the invention, casing 8 is axially symmetrical, i.e. is symmetrical crosswise to an axis A (Figure 2) along its major dimension. More specifically, casing 8 is tubular, and, for reasons explained later on, has a non-circular section crosswise to axis A - in the example shown, a depressed curved, e.g. oval, or prismatic section. By forming casing 8 so that it more or less extends in length along axis A, i.e. with more or less large dimensions crosswise to axis A, a given volume 9 can be obtained which takes into account the space allowed by the layout of system 1.

According to the invention, the closed inner volume 9 defined by casing 8 is divided into a first and second variable-volume chamber 11, 12 by a partition 13 fitted and movable axially (along axis A) inside casing 8, and cooperating in fluidtight manner with an inner lateral wall 14 of casing 8; and a second coupling 15 (Figure 2) is formed integrally with casing 8 to connect closed inner volume 9 hydraulically to the outside (of casing 8) - in the example shown, to branch-connect the closed inner volume to pipe 2 by means of pipe 5, which fits in known manner to upstream portion 3a of pipe 2.

According to the main aspect of the invention, couplings 10, 15 are so located that, in any position assumed selectively by partition 13, first variable-volume chamber 11 is always connected exclusively to first coupling 10, and second variable-volume chamber 12 is always connected exclusively to second coupling 15.

Resonator device 4 also comprises means - indicated as a whole by 16 (Figures 1 and 2) - for moving movable partition 13 axially inside casing 8 in response to a variation in the speed of the engine (not shown); and means for connecting couplings 10, 15 hydraulically to pipe 2, and defined, in the example shown, by pipes 6, 5, which may be rigid or flexible, and of any shape depending on the layout of system 1.

In section crosswise to axis A, inner lateral wall 14 is of said non-circular shape - in the example shown, oval - of the cross section of casing 8, and the periphery of movable partition 13 is the same shape as the cross section of casing 8, i.e. in the example shown, is also oval, to prevent partition 13 rotating with respect to axis A. To ensure sliding fluidtight sealing between wall 14 and partition 13, partition 13 has an elastomeric peripheral seal 18 preferably co-molded with partition 13, which in turn, like casing 8, is preferably molded from synthetic plastic material.

According to one aspect of the invention, casing 8 is so sized that the maximum volume of first chamber 11 is much smaller than the minimum volume of second chamber 12.

More specifically, casing 8 is divided into a first and second cup-shaped half-shell 20, 21 connected end to end in fluidtight manner, with their respective concavities facing, at respective mouth edges 22, 23; and a spoked support 25 is interposed between half-shells 20, 21, is gripped between edges 22, 23, and is designed to maintain hydraulic connection between the concavities of half-shells 20, 21 to define closed volume 9 as a whole.

Means 16 for moving movable partition 13 axially inside casing 8 in response to a variation in the speed of the engine served by system 1 comprise a shaft 30 fitted idly inside casing 8 and coaxial with axis of symmetry A; a hub 31 movable axially along shaft 30 and supporting partition 13; screw/nut screw means 32 interposed between shaft 30 and hub 31; and drive means 34 (Figure 1) for selectively rotating shaft 30 by a predetermined amount in a predetermined direction.

Shaft 30 is supported at a first end by spoked support 25, and, at a second end opposite the first, is housed in fluidtight manner (by means of an O-ring 35) through a sleeve seat 36 formed in one piece with a front end wall 37 of half-shell 20.

Shaft 30 is thus housed entirely inside half-shell 20, where it is locked axially between a first axial stop 38 carried by front end wall 37 of half-shell 20, and a second axial stop 39 carried by spoked support 25, so that movable partition 13 is also housed in sliding manner solely inside half-shell 20, and is movable selectively into a number of axial positions between front end wall 37 and spoked support 25, which determine the limit positions of partition 13.

Partition 13 is fitted to the end of hub 31 facing away from front end wall 37 in use, so that, in the limit position adjacent to wall 37, partition 13 is still a given distance from wall 37, equal to the axial length of hub 31, thus producing a minimum volume of chamber 11 (and, consequently, a maximum volume of chamber 12). Conversely, in the opposite limit position adjacent to spoked support 25, partition 13 produces a maximum volume of chamber 11 (and, consequently, a minimum volume of chamber 12).

Drive means 34 comprise an electric motor 40; mechanical transmission means 41 between motor 40 and shaft 30; and a central control unit 42 for controlling operation of motor 40, e.g. on the basis of data 43 exchanged with the central control unit of the engine served by system 1.

In the non-limiting embodiment shown, mechanical transmission means 41 comprise a pinion 44 carried by motor 40; a toothed pulley 45 fitted to the end of shaft 30 projecting from half-shell 20 through seat 36; and a toothed belt 46 (Figure 1). Alternatively, motor 40 may be fitted directly and coaxially to shaft 30, and the mechanical transmission means may simply comprise a joint connecting motor 40 and shaft 30.

Couplings 10, 15 are formed in one piece with casing 8 : coupling 10 in one piece with front end wall 37 of half-shell 20, in a radially eccentric position with respect to sleeve seat 36; and coupling 15 in one piece with half-shell 21, at a lateral wall portion 50 of half-shell 21 located axially close to the open end of half-shell 21 defined by edge 23.

In actual use, couplings 10, 15 of resonator 4 are therefore connected to the two hydraulically in-series portions 3a, 3b of engine intake pipe 2 by two different branch pipes 6, 5, which fit onto respective couplings 10, 15.

In the configuration shown, the upstream portion 3a (with respect to the air intake flow direction in pipe 2) is connected permanently to chamber 12, which acts as a resonance volume. Being much larger than chamber 11, the variations in the volume of chamber 12 produced by the movements of partition 13 are practically negligible, so casing 8 can be designed to provide chamber 12 with the best volume for absorbing the low (noise/vibration) frequencies generated by system 1.

Conversely, the downstream portion 3b is connected permanently to chamber 11, which acts as a highfrequency resonance volume. Since the high frequencies vary considerably with engine speed, and given the much smaller volume of chamber 11 as compared with chamber 12, even small movements of partition 13 produce a considerable percentage variation in the volume of chamber 11, sufficient to adjust the frequency absorption profile when chamber 11 acts as a resonance volume. Central control unit 42, therefore, need simply be programmed to select the best axial position of partition 13 as a function of engine speed to achieve optimum consistent statement of high frequencies with no negative effects on the statement of low frequencies.

In other cases, of course, it may be appropriate to invert the connections shown, i.e. connect the larger-volume chamber 12 to downstream portion 3b, and chamber 11 to upstream portion 3a, which can be done by simply inverting pipes 5, 6.

## Claims

1. A variable-geometry resonator for an air intake system of a vehicle engine, the resonator comprising a casing defining a closed inner empty volume of given size, and at least a first coupling for connecting said closed inner volume hydraulically to the outside; the first coupling being formed integrally with the casing, and being branch-connectable to an air intake pipe of the engine; **characterized in that** said casing is axially symmetrical, said closed inner volume of the casing being divided into a first and second variable-volume chamber by a partition fitted and movable axially inside said casing and cooperating in fluidtight manner with an inner lateral wall of the casing; and **in that**, in combination, the resonator also comprises a second coupling for connecting said closed inner volume hydraulically to the outside, and which is formed integrally with the casing and branch-connectable to an air intake pipe of the engine; said couplings being so located that said first variable-volume chamber is always connected exclusively to said first coupling, and said second variable-volume chamber is always connected exclusively to said second coupling; the resonator also comprising means for moving the movable partition axially inside the casing in response to a variation in the speed of the engine; and means for hydraulically connecting the couplings to two different portions, located hydraulically in series, of said intake pipe of the engine.

2. A resonator as claimed in Claim 1, **characterized in that**, in section crosswise to the axis of symmetry of the casing, said inner lateral wall of the casing is non-circular; said movable partition being peripherally of the same shape as the cross section of the casing, to prevent the movable partition rotating with respect to said axis of symmetry of the casing.

3. A resonator as claimed in Claim 2, **characterized in that** the cross section of said casing and of its inner lateral wall is oval.

4. A resonator as claimed in Claim 2 or 3, **characterized in that** said means for moving the partition axially inside the casing in response to a variation in the speed of the engine comprise a shaft fitted idly inside the casing and coaxially with the axis of symmetry of the casing; a hub movable axially along the shaft and supporting said partition; screw/nut screw means interposed between the shaft and the hub; and drive means for producing a predetermined rotation of the shaft.

5. A resonator as claimed in Claim 4, **characterized in that** said drive means comprise an electric motor; mechanical transmission means between the motor and the shaft; and a central control unit for controlling operation of said motor.

6. A resonator as claimed in Claim 4 or 5, **characterized in that** said casing is divided into a first and second cup-shaped half-shell connected in fluidtight manner to each other with their respective concavities facing; a spoked support being interposed and gripped between said half-shells to support a first end of said shaft; a second end of said shaft, opposite the first end, being housed in fluidtight manner through a sleeve seat formed in one piece with a front end wall of the first half-shell.

7. A resonator as claimed in Claim 6, **characterized in that** said partition is housed and slides exclusively inside said first half-shell, and is movable between said front end wall and said spoked support, which maintains hydraulic connection between the concavities of said first and said second half-shell; said shaft being locked axially between a first axial stop carried by said front end wall of the first half-shell, and a second axial stop carried by said spoked support.

8. A resonator as claimed in Claim 6 or 7, **characterized in that** said first and said second coupling are formed in one piece with said casing, the first coupling at said front end wall of the first half-shell and radially eccentric with respect to said sleeve seat, and the second coupling at a lateral wall portion of and axially close to an open end of said second half-shell.

9. A resonator as claimed in any one of the foregoing Claims, **characterized in that** said first chamber has a maximum volume much smaller than the minimum volume of said second chamber.

10. An air intake system of a vehicle engine, **characterized by** comprising an intake pipe, and a variable-geometry resonator branch-connected hydraulically to said pipe.

11. An intake system as claimed in Claim 10, **characterized in that** said variable-geometry resonator is formed as claimed in one of the foregoing Claims; said couplings of the resonator casing being connected to two different hydraulically in-series portions of said intake pipe of the engine by means of two different branch pipes, each of which fits onto a said coupling.
